# EUROPÄISCHE PATENTSCHRIFT

(11) **EP 3 516 212 B1**
(45) Veröffentlichungstag und Bekanntmachung des Hinweises auf die Patenterteilung: **04.12.2024**
(21) Anmeldenummer: 17755053.0
(22) Anmeldetag: 03.08.2017
(51) Int. Cl.: F03D 13/25, B63B 35/44, B63B 22/02, B63B 21/50

(54) **MOORING-BOJE FÜR EINE SCHWIMMENDE WINDENERGIEANLAGE**
MOORING BUOY FOR A FLOATING WIND TURBINE
BOUÉE D'AMARRAGE POUR ÉOLIENNE FLOTTANTE

(30) Priorität: 26.09.2016 DE 102016118079
(43) Veröffentlichungstag der Anmeldung: 31.07.2019
(73) Patentinhaber: aerodyn consulting Singapore pte ltd, Singapore 188024 (SG)
(72) Erfinder: SIEGFRIEDSEN, Sönke, 24768 Rendsburg (DE)
(74) Vertreter: Lobemeier, Martin Landolf
(86) Internationale Anmeldenummer: PCT/DE2017/100656
(87) Internationale Veröffentlichungsnummer: WO 2018/054419

(56) Entgegenhaltungen:
- EP-A2- 2 311 725
- WO-A1-02/073032
- WO-A1-2011/014075
- WO-A1-2016/000681
- WO-A1-99/02856
- DE-A1- 3 224 976
- US-A- 4 892 495
- US-A- 5 628 657

## Beschreibung

Die Erfindung betrifft eine Verankerungsboje (Mooring-Boje) für eine schwimmende Windenergieanlage, die vorinstalliert an die zukünftige Position der Windenergieanlage verbracht und mit einer Mehrzahl von Verbindungselementen, die mit dem Meeresboden verankert sind, an der gewünschten Position gehalten wird. Diese Boje ist lösbar mit der schwimmenden Windenenergieanlage verbunden und beinhaltet zugleich das Energieabführungskabel.

Neben der etablierten Windenergienutzung an Land werden auch zunehmend Offshore-Anlagen errichtet. Diese Anlagen unterliegen besonderen Anforderungen hinsichtlich Wartungsarmut, Zuverlässigkeit, Anlagengröße und Umwelteinflüssen. Zurzeit werden ausschließlich bodengebundene Offshore-Anlagen verwendet, die durch Stahlrohre mit dem Untergrund fest verbunden werden.

Für die Installation dieser Anlagen benötigt man große Transport- und Errichterschiffe, die besonders teuer im Einsatz sind. Hinzu kommt, dass bei den bodengebundenen Anlagen die Wassertiefe limitiert ist und der Boden bestimmte Eigenschaften aufweisen muss.

Seit einiger Zeit wird aber auch verstärkt über schwimmende Offshore-Windenergieanlagen nachgedacht, die mehr oder weniger steif mit dem Meeresboden verbunden sind.

Diese schwimmenden Anlagen, die über Kettensysteme mit dem Boden verbunden werden, weisen die vorgenannten Nachteile nicht auf und können auch bei größeren Wassertiefen eingesetzt werden. Dadurch kann der Einsatzbereich von Windenergieanlagen erheblich erweitert werden.

Die heutigen, wenigen schwimmenden Windenergieanlagen sind meistens mittels Ketten mit dem Meeresboden ortsfest verbunden. Diese Ketten werden regelmäßig mittels Ankern am Boden positioniert. Für die Installation der Windenergieanlage am Ort werden diese mit Schleppern verbracht und die Ketten dann direkt an dem jeweiligen Schwimmer befestigt.

Dieses wird zumeist sehr zeitnah vorgenommen und benötigt daher eine Vielzahl von großen Schiffen, die vor Ort koordiniert werden müssen. Das ist nicht nur teuer, sondern auch zeitaufwändig. Ferner ist das Wetterfenster für eine derartige Aktion sehr klein, da größere Wellenhohen nur schwer bewältigt werden können.

Allerdings ist aus der WO 2016/000681 A1 ein mittels Ketten am Meeresgrund verankerter Schwimmkörper bekannt, der eine mechanische Fixierung einer schwimmenden Windenergieanlage unter gleichzeitiger elektrischer Kupplung mit einem Seekabel ermöglicht.

Hierbei besteht allerdings das Problem, dass die an der Wasseroberfläche schwimmende Windenergieanlage mit dem an der Wasseroberfläche treibenden Schwimmkörper verbunden werden muss, wobei es diese Veröffentlichung offen lässt, wie die Verbindung erfolgen soll. Aufgabe der Erfindung ist es daher, eine Verankerung für eine schwimmende Windenergieanlage zu schaffen, die sicher, schnell und einfach auszuführen ist.

Diese Aufgabe wird erfindungsgemäß durch die aus Windenergieanlage und Mooring-Boje gebildete Einheit mit den Merkmalen von Anspruch 1 gelöst. Die Unteransprüche geben vorteilhafte Ausgestaltungen der Erfindung wieder.

Erfindungsgemäß wird also eine Boje mit konischer Außenfläche verwendet, wobei der kleine Durchmesser des Konus nach oben weist. Die Boje weist bevorzugt einen flut- und entleerbaren ringförmigen Wassertank auf. Der Innenraum der ringförmigen Boje ist offen. Im mittleren Bereich ist eine Drehverbindung angeordnet, die am Außenring mit der Boje wasserdicht verbunden ist. Der Innenring der Lagers ist mit einem Abschlussdeckel verbunden oder ist selber als solcher hergestellt. Dieser Abschlussdeckel ist also gegenüber der Boje drehbar.

Die Drehverbindung, vorteilhaft eine dreireihige Rollendrehverbindung, wird über Spezialdichtungen gegen das Eindringen von Meerwasser abgedichtet.

Die Bodenplatte verfügt über ein zentrales Loch, durch das das Energiekabel geführt und gegenüber dem Meereswasser abgedichtet ist. Im äußeren Bereich der Bodenplatte sind Löcher für die Verankerungselemente, vorzugsweise Drahtseile, vorgesehen. Die Anzahl bestimmt sich aus der Anforderung der Genehmigung und der Windparkgeometrie. Üblicherweise werden meistens 5 Verankerungselemente verwendet, aber auch 3, 4 und 6 Verankerungselemente wären nicht unüblich. Aus Redundanzgründen kann auch eine Mehrzahl dieser Anzahl zur Verwendung kommen. Die Verankerungselemente werden auch in der Bodenplatte in der gewünschten Position fest fixiert.

Um den gewünschten Standort der Windenergieanlage herum werden die Bodenbefestigungselemente in geeigneten Abstand in den Gewässergrund eingebracht und die Verbindungselemente, meistens eine Kette am Anker und der Teil zur Boje als Seilelement, zum Zentrum, dem späteren Ort der Windenergieanlage verlegt. An dieser Stelle wird die Boje verbracht und mit den Verbindungselementen verbunden. Zusätzlich wird ein flexibles Hochspannungs-Unterwasserkabel mit der Boje verbunden. Bei diesen Arbeiten schwimmt die Boje auf dem Wasser.

Wenn die Windenergieanlage fertiggestellt ist, wird diese mittels Schleppern zum Standort der Boje geschleppt. Dabei ist die schwimmende Windenergieanlage in Schleppposition aus dem Wasser aufgetaucht. Die Windenergieanlage verfügt an der vorderen Seite des Schwimmfundamentes eine konische Öffnung an der Unterseite des Schwimmerelementes. Die Öffnung ist von der Geometrie an die Außenkontur der Boje angepasst.

Zentrisch über dieser konischen Öffnung befindet sich der Schleifringkörper zur späteren Verbindung mit dem Stromkabel. Dieses befindet sich im wasserfreien Raum oberhalb der Wasserlinie im Transportzustand.

Für die Verbindung der Boje mit der schwimmenden Windenergieanlage wird bei Erreichen der Position die Boje durch Öffnen eines (Boden-) Ventils mittels einer Fernbedienung der Wassertank der Boje mit Seewasser geflutet auf diese eine vorbestimmte Tiefe abgesenkt und die Windenergieanlage mit einem Positionierungssystem mit ihrer Bodenöffnung genau über die abgetauchte Boje geschleppt. Entsprechende Sensorik ist vorzusehen. Dann wird das Ballastwasser durch z.B. in einem Drucklufttank gespeicherte Druckluft ausgetrieben und die Boje wieder zum langsamen Aufstieg bewegt und in die konische Öffnung am Fundament der Windenergieanlage eingeführt. Danach wird eine feste Verbindung zwischen der Boje und der Windenergieanlage durch Schrauben o.ä. hergestellt.

Zum Schutz vor Beschädigungen kann die Boje mit Polsterflächen wie Gummimatten o.ä. belegt werden. Nach der Verbindung von Boje und Anlage wird der Raum zwischen den beiden von mitgenommenem Wasser befreit und trocken gelegt. Die Verbindung besitzt eine Dichtung um dauerhaft Wasser aus diesem Zwischenraum fernzuhalten. Danach wird das Stromkabel mit dem darüberlegenden Schleifringkörper verbunden und die Kopplung zum Netz hergestellt. Danach wird die Anlage auf Betriebstiefgang abgesenkt und in Betrieb genommen.

Für die Rückführung der Anlage zum Hafen für Reparaturzwecke ist der Vorgang umgekehrt und kann beliebig vorgesehen werden. Bei großen Reparaturen müssen also keine langwierigen , gefährlichen und kostenintensiven Offshore-Operationen durchgeführt werden, sondern mit zwei kleinen kostengünstigen Scheppern kann die Anlage zum Hafen verbracht werden und gleichzeitig eine neue oder erneuerte Anlage an der frei gewordenen Boje zur Stromerzeugung verbunden werden. Dieses ist bei den derzeit gegebenen Systemen von schwimmenden Offshore-Anlagen nicht gegeben.

Erfindungsgemäß ist also eine Einheit mit einer ein schwimmendes Fundament aufweisenden schwimmenden Windenergieanlage und einer mit dem schwimmenden Fundament der schwimmenden Windenergieanlage verbindbaren schwimmenden Mooring-Boje mit wenigstens einem Verankerungsmittel zur Verankerung der Mooring-Boje am Gewässergrund vorgesehen, wobei das schwimmende Fundament der schwimmenden Windenergieanlage eine Ausnehmung zur Aufnahme der Mooring-Boje aufweist, wobei die Ausnehmung der Mooring-Boje von der Unterseite des Fundaments zugänglich und wenigstens teilweise komplementär zur Außenkontur der Mooring-Boje ausgebildet ist.

Eine exakte Positionierung und ein für die Kräfteübertragung grundsätzlich vorteilhafter Formschluss zwischen Windenergieanlage und Mooring-Boje wird insbesondere dann erreicht, wenn die Mooring-Boje konisch (und die Ausnehmung komplementär dazu) ausgebildet ist.

Erfindungsgemäß ist die Mooring-Boje selbst aus einer einen Hohlzylinder ausbildenden, konisch zulaufenden Wandung und einer den Hohlzylinder einseitig verschließenden Bodenplatte gebildet, wobei die Wandung der Mooring-Boje relativ zur Bodenplatte drehbar gelagert ist.

In der Bodenplatte ist insbesondere eine zentral in der Bodenplatte angeordnete erste Durchführung zur Durchführung eines Seekabels vorgesehen, wobei speziell wenigstens eine weitere in der Bodenplatte angeordnete zweite Durchführung zur Durchführung des Verankerungsmittels vorteilhaft ist.

Um ein Ab- und Auftauchen der Boje bewerkstelligen zu können, ist in der Mooring-Boje, bevorzugt in deren Wandung, ein Ballastwassertank vorgesehen, der mit Wasser aus der Umgebung gefüllt und mit Hilfe von Druckluft ausgeblasen werden kann. Entsprechende Hilfsmittel in Form von Pumpen und Ventilen sind hierfür vorzusehen. Diese Hilfsmittel sind bevorzugt mittels einer Funkfernsteuerung vom Schlepper oder der Windenergieanlage aus bedienbar.

Weiter ist bevorzugt vorgesehen, dass die Ausnehmung des schwimmenden Fundaments und die in die Ausnehmung eingesetzte Mooring-Boje einen geschlossenen Raum ausbilden. Der Vorteil dieser Ausgestaltung liegt darin, dass ein trockener und für Wartungsarbeiten auch zugänglicher Raum geschaffen wird, in dem die elektrischen Komponenten der Windenergieanlage vor Feuchtigkeit geschützt sind.

Insbesondere sind auch Mittel zum Spannen der Verankerungsmittel und/oder des Seekabels vorzusehen.

Schließlich kann die Mooring-Boje an ihrem Außenumfang angeordnete schockabsorbierende Elemente aufweisen, die beim Verbinden mit der Windenergieanlage Schäden an der Mooring-Boje oder der Windenergieanlage zu vermeiden helfen.

Zur Installation einer mit einem Ballastwassertank ausgestalteten Einheit sind die folgenden Schritte vorgesehen:
- Verankern einer Mooring-Boje (mit Verbindungselementen) am vorbestimmten Ort zur Installation der schwimmenden Windenergieanlage,
- Befestigen eines Seekabels an der Mooring-Boje,
- Absenken der Mooring-Boje durch Fluten des Ballastwassertanks,
- Positionieren der Ausnehmung des schwimmenden Fundaments der schwimmenden Windenergieanlage oberhalb der Mooring-Boje,
- Einsetzen der Mooring-Boje in die Ausnehmung des schwimmenden Fundaments durch Auftauchen lassen der Mooring-Boje mittels Entleeren des Ballastwassertanks, und
- Verbinden des Seekabels mit der schwimmenden Windenergieanlage mittels eines Schleifrings.

Darauf wird bevorzugt das Absenken der Windenergieanlage gemeinsam mit der Mooring-Boje mittels Fluten von im Fundament der Windenergieanlage vorgesehenen Ballastwassertanks vorgenommen.

Die Erfindung wird anhand eines in den beigefügten Zeichnungen dargestellten besonders bevorzugt ausgestalteten Ausführungsbeispiels näher erläutert. Es zeigen:
- Fig. 1: eine perspektivische Ansicht einer besonders bevorzugt ausgestalteten Mooring-Boje nach der Erfindung;
- Fig. 2: eine perspektivische Ansicht der besonders bevorzugt ausgestalteten Mooring-Boje nach der Erfindung mit einem den Bojenraum abschließenden Deckel;
- Fig. 3: eine Schnittansicht der Mooring-Boje;
- Fig. 4: eine perspektivische Ansicht einer besonders bevorzugt ausgestalten Einheit nach der Erfindung bei der Installation an einem Offshore-Standort;
- Fig. 5: eine Seitenansicht der in Fig. 4 dargestellten Einheit;
- Fig. 6: eine detaillierte Seitenansicht der abgesenkten Mooring-Boje im Bereich der Ausnehmung des Fundaments der schwimmenden Windenergieanlage;
- Fig. 7: eine Seitenansicht der oberhalb der Mooring-Boje positionierten Windenergieanlage; und
- Fig. 8: die mit der Mooring-Boje verbundene Windenergieanlage.

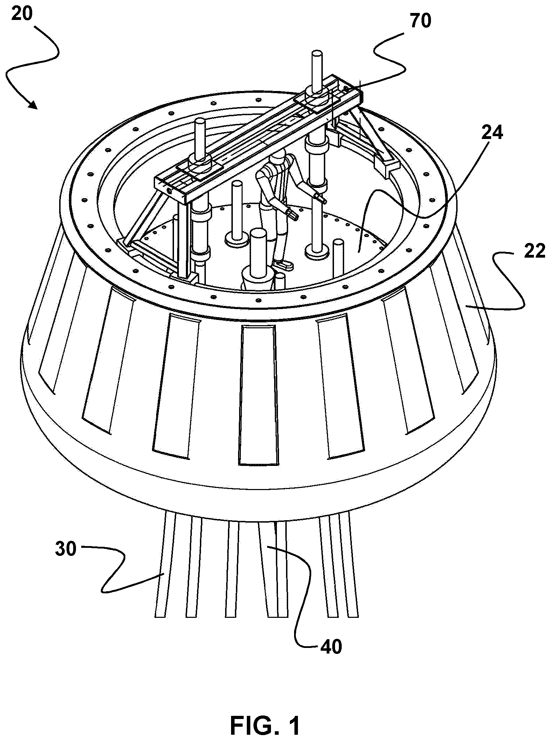

Fig. 1 zeigt eine perspektivische Ansicht einer besonders bevorzugt ausgestalteten Mooring-Boje nach der Erfindung.

Die Mooring-Boje 20 weist eine von der Wandung 22 gebildete sich nach oben verjüngende, konische Außenkontur auf. Die Basis des Konus ist von einer Bodenplatte 24 gebildet, wobei die Mooring-Boje 20 mittels mehrerer Verankerungsmittel 30 mit dem Gewässergrund verbunden ist. Darüber hinaus ist die Mooring-Boje 20 mit einem Seekabel 40 verbunden, sodass die Mooring-Boje 20 als alleiniger Ankerpunkt für eine schwimmende Windenergieanlage bereitgestellt wird.

Ebenfalls dargestellt ist ein sich am oberen Rand der Wandung 22 abstützendes Mittel 70 zum Spannen der Verankerungsmittel 30 und/oder des Seekabels 40, sodass die Boje 20 bei deren Installation ortsgenau verankert werden kann.

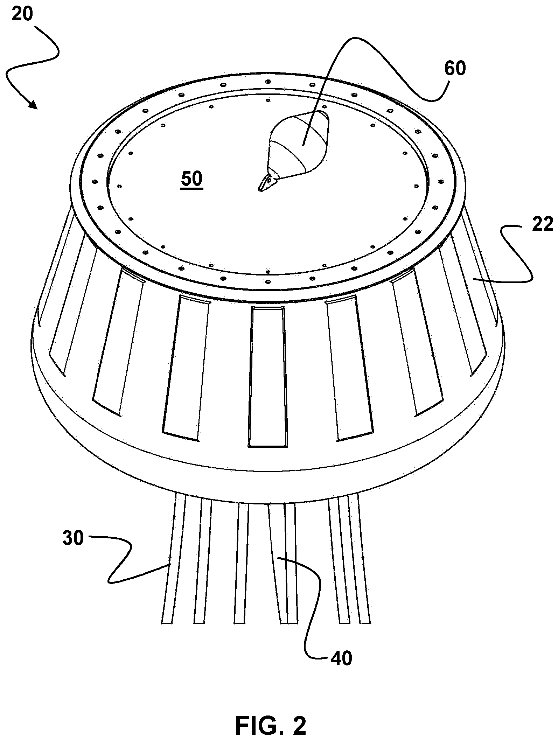

Fig. 2 zeigt eine perspektivische Ansicht der besonders bevorzugt ausgestalteten Mooring-Boje 20 nach der Erfindung mit einem den von der Wandung 22 und der Bodenplatte 24 gebildeten Raum abschließenden Deckel 50.

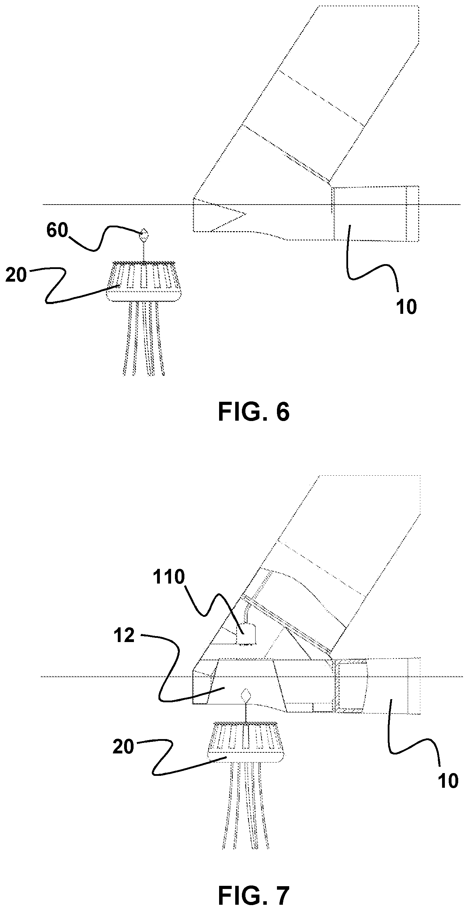

Am Deckel 50 ist ein Schwimmer 60 befestigt, der - wie Fig. 6 zeigt - als Führungshilfe beim Einsetzen der Boje 20 in das Fundament der Windenergieanlage dienen kann.

Der Deckel 50 sorgt dafür, dass in den in der Boje 20 vorgehaltenen Raum kein Wasser eindringen kann. Dieses ist insbesondere dann wichtig, wenn die Ausnehmung im Fundament der Windenergieanlage von unterhalb des Fundaments zugänglich ist und die Boje 20 abgesenkt werden muss. Der Deckel 50 ist hinsichtlich seiner Geometrie so beschaffen, dass dieser nach Einsetzen der Boje 20 in das Fundament der Windenergieanlage abgenommen werden kann.

Der Deckel 50 verschließt die Boje 20 also nach deren Verankerung bis zur Verbindung mit der Windenergieanlage. Das freie Ende des vorinstallierten Seekabels 40 ist während dieser Zeitspanne somit vor Korrosion geschützt.

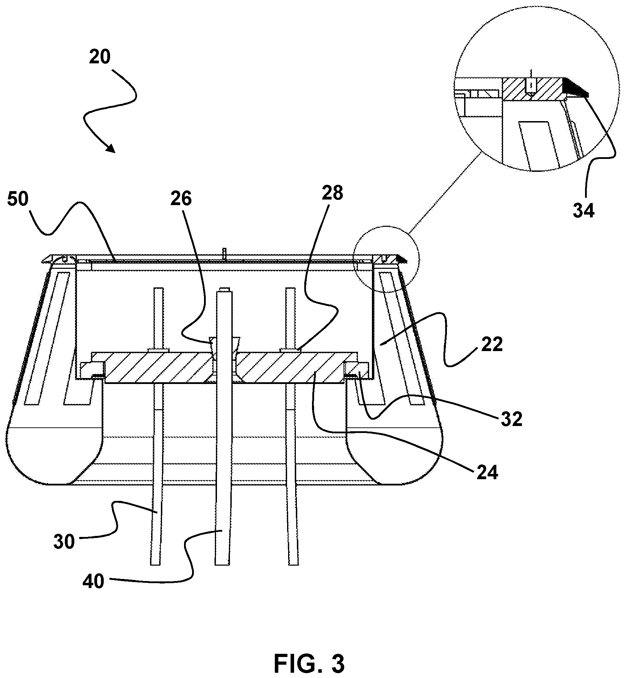

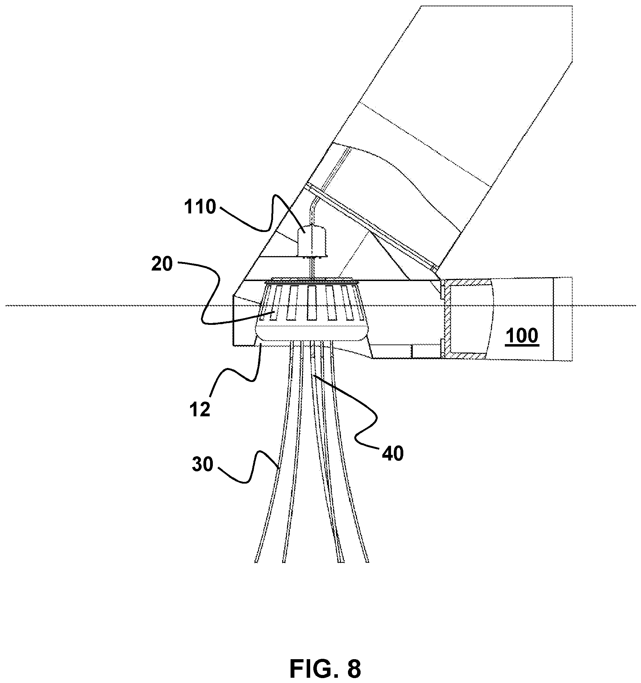

In der in Fig. 3 dargestellten Schnittansicht ist zu erkennen, dass die Wandung 22 der Mooring-Boje 20 um deren Bodenplatte 24 drehbar gelagert ist. Die Verankerungsmittel 30 und das Seekabel 40 sind hingegen durch in der Bodenplatte 24 vorgesehene Durchführungen 26, 28 drehfest mit der Bodenplatte 24 verbunden. Dabei ist das Seekabel 40 zentral durch die Bodenplatte 24 geführt, um jegliche durch eine Drehbewegung der Boje 20 auftretende, auf das Seekabel 40 wirkende Belastung gering zu halten. Ein an dem oberen Befestigungsflansch der Boje 20 vorgesehene Dichtung 34 dichtet die Ausnehmung 12 des Fundaments nach der Verbindung der Boje 20 mit der Windenergieanlage 100 gegenüber dem Seewasser ab (siehe auch Fig. 8).

Durch die relative Drehbarkeit von Wandung 22 zu Bodenplatte 24 kann die Windenergieanlage bei einer Fixierung von Wandung 22 und Fundament der Windenergieanlage um die mittels der Verankerungselement 30 fixierte Bodenplatte 24 über die Drehverbindung 32 drehen.

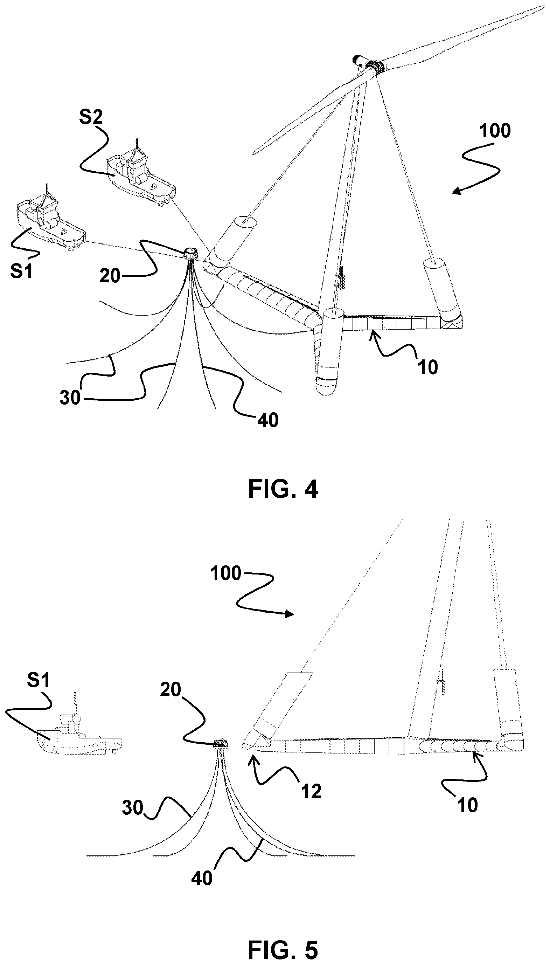

Zur Installation einer derart ausgebildeten Einheit wird nun - wie Fig. 4 gezeigt - eine schwimmende Windenergieanlage 100 an ihrem Fundament 10 durch zwei Schlepper S1, S2 so zum Installationsort gezogen, dass die Schlepper S1, S2 die Mooring-Boje 20 zwischen sich nehmen und Mooring-Boje 20 und Fundament 10 der schwimmenden Windenergieanlage 100 einander annähern.

In Fig. 5 ist zu erkennen, dass sowohl die Mooring-Boje 20 als auch das schwimmende Fundament 10 der Windenergieanlage 100 in diesem Verfahrensschritt auf der Gewässeroberfläche aufschwimmen.

Damit nun die Mooring-Boje 20 in die von unterhalb der Wasserlinie zugängliche Ausnehmung 12 des Fundaments 10 eingesetzt werden kann, ist es notwendig, dass die Boje 20 abgesenkt wird. Dieses erfolgt insbesondere durch Aufnahme von Ballastwasser, wobei die Boje 20 bevorzugt einen in der Wandung 22 angeordneten, insbesondere ringförmig ausgebildeten Ballastwassertank aufweist. Dieser kann durch die Fernbedienung eines Seeventils mit Seewasser geflutet werden.

Fig. 6 zeigt eine Seitenansicht der abgesenkten Mooring-Boje 20 im Bereich des Fundaments 10 der schwimmenden Windenergieanlage 100, wobei der ebenfalls der auf der Boje 20 angeordnete Schwimmer 60 erkennbar ist.

Der Schwimmer 60 kann als Leitstruktur zum Einführen der Boje 20 in die Ausnehmung 12 verwendet werden, z.B. gegriffen und geführt werden. Alternativ oder zusätzlich kann der Schwimmer 60 auch so ausgebildet sein, dass dieser aktiv oder passiv geortet werden kann, um die Positionierung der Windenergieanlage 100 relativ zur Boje 20 zu erleichtern.

Über die in Fig. 7 in Seitenansicht gezeigt Position wird die Mooring-Boje 20 schließlich in die in Fig. 8 gezeigte Position überführt, in der die Mooring-Boje 20 nach dem Einführen in die Ausnehmung 12 des Fundaments 10 mit der Windenergieanlage 100 verbunden ist.

Ebenfalls ist zu erkennen, dass das Seekabel 40 an den Schleifringkörper 110 angeschlossen ist, der oberhalb der zentral im Boden 24 der Boje 20 angeordneten Durchführung 26 angeordnet ist.

Die Windenergieanlage 10 ist somit grundsätzlich einsatzbereit.

Aus Gründen der Stabilität wird das Fundament 10 durch Fluten von im Fundament 10 vorgesehenen Ballastwassertanks abgesenkt, sodass der Einfluss von Wellen geringer ausfällt als bei einer auf der Wasseroberfläche schwimmenden Windenergieanlage 100.

## Patentansprüche

1. Einheit mit
- einer ein schwimmendes Fundament (10) aufweisenden schwimmenden Windenergieanlage (100) und
- einer mit dem schwimmenden Fundament (10) der schwimmenden Windenergieanlage (100) verbindbaren schwimmenden Mooring-Boje (20) mit wenigstens einem Verankerungsmittel (30) zur Verankerung der Mooring-Boje (20) am Gewässergrund,
wobei
- das schwimmende Fundament (10) der schwimmenden Windenergieanlage (100) eine Ausnehmung (12) zur Aufnahme der Mooring-Boje (20) aufweist, die von der Unterseite des Fundaments (10) zugänglich und wenigstens teilweise komplementär zur Außenkontur der Mooring-Boje (20) ausgebildet ist, **dadurch gekennzeichnet, dass**
- die Mooring-Boje (20) aus einer einen Hohlzylinder ausbildenden, konisch zulaufenden Wandung (22) und einer den Hohlzylinder einseitig verschließenden Bodenplatte (24) gebildet ist, wobei die Wandung (22) relativ zur Bodenplatte (24) drehbar gelagert ist.

2. Einheit nach Anspruch 1, **gekennzeichnet durch** eine zentral in der Bodenplatte (24) angeordnete erste Durchführung (26) zur Durchführung eines Seekabels (40).

3. Einheit nach einem der vorhergehenden Ansprüche, **gekennzeichnet durch** wenigstens eine in der Bodenplatte (24) angeordnete zweite Durchführung (28) zur Durchführung des Verankerungsmittels (30).

4. Einheit nach einem der vorhergehenden Ansprüche, **dadurch gekennzeichnet, dass** die Mooring-Boje (20) wenigstens einen Ballastwassertank aufweist.

5. Einheit nach einem der vorhergehenden Ansprüche, **dadurch gekennzeichnet, dass** die Ausnehmung (12) des schwimmenden Fundaments (10) und die in die Ausnehmung (12) eingesetzte Mooring-Boje (20) einen geschlossenen Raum ausbilden.

6. Einheit nach einem der vorhergehenden Ansprüche, **dadurch gekennzeichnet, dass** in der Mooring-Boje (20) Mittel zum Spannen der Verankerungsmittel (30) und/oder des Seekabels (40) vorgesehen sind.

7. Einheit nach einem der vorhergehenden Ansprüche, **gekennzeichnet durch** am Außenumfang der Mooring-Boje (20) angeordnete schockabsorbierende Elemente.

## Claims

1. A unit comprising
- a floating wind turbine (100) having a floating foundation (10) and
- a floating mooring buoy (20) connectable to the floating foundation (10) of the floating wind turbine (100), having at least one anchoring means (30) for anchoring the mooring buoy (20) on the floor of the body of water,
wherein
- the floating foundation (10) of the floating wind turbine (100) has a recess (12) for accommodating the mooring buoy (20), wherein the recess (12) of the mooring buoy (20) is accessible from the lower side of the foundation (10) and is formed at least partially complementary to the outer contour of the mooring buoy (20)
**characterized in that**
the mooring buoy (20) is formed from a conically tapering wall (22), which forms a hollow cylinder, and a base plate (24) closing the hollow cylinder on one side, the wall (22) being mounted rotatably relative to the base plate (24).

2. Unit according to claim 1, **characterized by** a first feedthrough (26), arranged centrally in the base plate (24), for feeding through an undersea cable (40).

3. Unit according to any one of the preceding claims, **characterized by** at least one second feedthrough (28), arranged in the base plate (24), for feeding through the anchoring means (30).

4. nit according to any one of the preceding claims, **characterized in that** the mooring buoy (20) has at least one ballast water tank.

5. Unit according to any one of the preceding claims, **characterized in that** the recess (12) of the floating foundation (10) and the mooring buoy (20) inserted into the recess (12) form a closed space.

6. Unit according to any one of the preceding claims, **characterized in that** means for tensioning the anchoring means (30) and/or the undersea cable (40) are provided in the mooring buoy (20).

7. Unit according to any one of the preceding claims, **characterized by** shock absorbing elements arranged on the outer circumference of the mooring buoy (20).

## Revendications

1. Unité comportant
- une éolienne flottante (100) présentant une fondation flottante (10) et
- une bouée d'amarrage (20) flottante pouvant être reliée à la fondation flottante (10) de l'éolienne flottante (100) et comportant au moins un moyen d'ancrage (30) pour l'ancrage de la bouée d'amarrage (20) au fond de l'eau,
dans laquelle
- la fondation flottante (10) de l'éolienne flottante (100) présente un évidement (12) destiné à recevoir la bouée d'amarrage (20), lequel évidement est accessible depuis la face inférieure de la fondation (10) et est réalisé au moins partiellement de manière complémentaire au contour extérieur de la bouée d'amarrage (20),
**caractérisée en ce que**
la bouée d'amarrage (20) est formée d'une paroi (22) se terminant en cône et formant un cylindre creux et d'une plaque de fond (24) fermant le cylindre creux d'un côté, dans laquelle la paroi (22) est montée de manière à pouvoir tourner par rapport à la plaque de fond (24).

2. Unité selon la revendication 1, **caractérisée par** un premier passage (26) disposé au centre de la plaque de fond (24) pour le passage d'un câble sous-marin (40).

3. Unité selon l'une des revendications précédentes, **caractérisée par** au moins un second passage (28) disposé dans la plaque de fond (24) pour le passage du moyen d'ancrage (30).

4. Unité selon l'une des revendications précédentes, **caractérisée en ce que** la bouée d'amarrage (20) présente au moins un réservoir d'eau de ballast.

5. Unité selon l'une des revendications précédentes, **caractérisée en ce que** l'évidement (12) de la fondation flottante (10) et la bouée d'amarrage (20) insérée dans l'évidement (12) forment un espace fermé.

6. Unité selon l'une des revendications précédentes, **caractérisée en ce que** des moyens permettant de tendre le moyen d'ancrage (30) et/ou le câble sous-marin (40) sont prévus dans la bouée d'amarrage (20).

7. Unité selon l'une des revendications précédentes, **caractérisée par** des éléments absorbant les chocs disposés sur la circonférence extérieure de la bouée d'amarrage (20).
